# EUROPEAN PATENT APPLICATION

(11) **EP 1 832 152 A1**
(43) Date of publication of application: **12.09.2007**
(21) Application number: 07380069.0
(22) Date of filing: 07.03.2007
(51) Int. Cl.: A01B 39/24

(54) **A multipurpose self-propelled agricultural machine with great soil clearing**

(30) Priority: 07.03.2006 AR P060100862
(71) Applicant: Sanguinetti, Horacio Adolfo, Rojas-Provincia de Buenos Aires (AR)
(72) Inventor: Sanguinetti, Horacio Adolfo, Rojas-Provincia de Buenos Aires (AR)
(74) Representative: González Ballesteros, Pedro

(57) **Abstract**

This invention refers to a self-propelled, multipurpose agricultural machine of a considerable power, of great soil clearing, with a mechanism (5) for assembling and lifting laboring tools, which can perform tasks such as sowing and/or fertilizing, spraying, fumigation, and/or any other labor according to the tools being attached, in lands apt to cultivating and between the lines of the existing crop, whatever its degree of growth, without damaging those crops.

## Description

This invention refers to a multipurpose self-propelled agricultural machine with great soil clearing with a mechanism for fitting and lifting tools for tilling, sowing, and/or fertilizing, spraying, fumigating, and/or any other labors with other tools being fitted, in lands apt for cultivating and within the lines of existing crop whatever its stage of development, without damaging said crop.

### STATUS OF TECHNOLOGY AND PROBLEMS TO SOLVE.

At present, it is not widely known by the public the existence of a multipurpose self-propelled agricultural machine with great soil clearing with the possibility of performing multiple agricultural activities, passing through the crop lines whatever its stage of growth, without damaging it, in order to perform labors such as sowing and/or fertilizing, spraying, and other labors according to the labor device being fitted.

### OBJECT OF THE INVENTION

The object of this invention is described in this memory with the aid of the complementary attached drawings of a multipurpose self-propelled agricultural machine with great soil clearing, since the labors that may be performed vary with different tools being fitted. Its feature of great soil clearing makes it possible to pass through crop lines at any stage of growth. This new multipurpose machine has been designed with the aim of improving productivity as from the technical point of view as well as ensuring the ecological conservation of soil. Since, given the possibility of passing among the crop lines or furrows of corn, sunflowers, wheat, sorghum, soy, etc, whatever their stage of development, it is possible to sow a new crop between the existing one or the same plant, or fertilize or spray the crop. This advantage makes the difference with the other sowing machines and fertilizers, as well as the fact of being self-propelled. Therefore, this is an important advantage, since it permits to produce two crops in the same cycle with the aid of a self-propelled machine with a sowing and/or fertilization device that increases productivity, and, at the same time, it allows an optimal combination of cultures to preserve ecology. This machine is characterized in that the sowing equipment and the hopper may be easily disassembled and therefore it may become a self-propelled fumigating and/or spraying machine comparable to any of the existing ones with the advantage of passing between the crop lines or furrows whatever their degree of growth without damaging them. This new multi-purpose machine has been designed for the producer to have an only self-propelled machine to perform the sowing and/or fertilization works, fumigation, and/or spraying or other thanks to the advantage of easily assembling and disassembling the different sowing and/or fertilization and spraying devices or any other device for another agricultural labor.
The feature of this self-propelled multipurpose agricultural great soil clearing machine of being easily disassembled adds the advantage of allowing its conversion into another machine.

### TITLE AND TECHNICAL FIELD OF THE INVENTION

This invention refers to a self-propelled multipurpose agricultural machine of a considerable power and great soil clearing with a mechanism for fitting and lifting tools for tilling, sowing and/or fertilizing, spraying, fumigating and/or any other labor according to the element being attached, for lands apt for cultivating between crop lines whatever the degree of growth of those crops, without damaging them.

### PRESENT STATUS OF TECHNOLOGY AND PROBLEMS TO SOLVE

It is not widely known by the public the existence of a self-propelled agricultural machine of great soil clearing with the capacity of performing several agricultural labors and passing between the lines of existing crops whatever their degree of growth, without damaging them, with the purpose of sowing and/or fertilizing, spraying and other labors according to the device being attached.

### OBJECT OF THE INVENTION

The object described in this memory, with the aid of the attached complementary drawings, refers to a multi-purpose self-propelled agricultural machine of great soil clearing, since the labors to be performed vary with the tools being attached. It is characterized in that it performs great soil clearing, which allows it to pass between the existing lines of crops at any stage of growth. This new multi-purpose machine has been designed with the aim of improving productivity and preserving the land's ecology. As it may pass between the lines or furrows of corps such as corn, sunflowers, wheat, sorghum, soy, etc, whatever their stage of growth, this machine permits the sowing of another crop between those lines, or the same one, and, at the same time, fertilize or spray the crop. This advantage makes it different from the rest of the existing sowing machines or fertilizers as well as the fact that it is self-propelled. Thus, this is a considerable advantage, since it permits to produce two crops in the same cycle, and allows the producer, with this self-propelled machine with a sowing and/or fertilization device, to increase productivity and yield, and, at the same time, make an optimal combination of crops to preserve the ecology. This machine is characterized in that the sowing and hopper equipment may be easily disassembled, therefore, it may become a self-propelled machine for fumigation and/or spraying purposes comparable to any of the existing ones, with the advantage that it may pass between the crop lines or furrows at any stage of growth without damaging it. This new multi-purpose machine has been designed for the producer to have an only self-propelled machine for performing different labors such as sowing and/or fertilizing, fumigating and/or spraying, or any other thanks to the advantage of the easy assembling and disassembling of the different devices for sowing and/or fertilizing and spraying or any other device for any other labor.

The feature of the easy disassembly adds the advantage to convert it into another agricultural machine for any other labor according to the device being fitted, which, in turn, adds the multipurpose characteristic. Thus, it addresses the problem of agricultural labors that could not be performed before because there was no access to the crop line or furrow due to its stage of growth. Thanks to this multipurpose self-propelled machine, according to the device attached, access to crop line is guaranteed for performing any agricultural labor, as, for example, plowing the land, if a plough is attached, among other applications and uses. This is an advantage for the producer since, with a small inversion, they obtain more applications.

The features of novelty and practical use of this multipurpose, self-propelled agricultural machine of great soil clearing are the basis for obtaining the privilege of exclusivity sought in this patent application.

### BRIEF DESCRIPTION OF DRAWINGS

In order to illustrate the object of this invention, 7 schematic drawings have been attached for one of the preferred modalities of use, as an example, in which:
FIG. 1 is the perspective view of the multipurpose, self-propelled agricultural machine of great soil clearing, which illustrates the general disposition of its elements.
FIG. 2 is the perspective view of the multipurpose, self-propelled agricultural machine of great soil clearing with the sowing and/or fertilizing kit attached showing the way in which it is assembled and the way to arrange the sowing bodies in order to pass between the crop lines without damaging the crop.
FIG. 3 Perspective view of the frame, which consists of a tubular structure of crossbars and crosspieces.
FIG. 4 Isometric drawing of the frame with its supporting legs and the lifting system for the labor tools.
FIG. 5 Perspective view of the lifting holder.
FIG. 6 A view of the holding in which the different tools are fixed.
FIG. 7 The fertilizer sowing machine's frame that consists of a tubular structure with two separate crossbars with a groove and its frame.

### DETAILED DESCRIPTION OF THE INVENTION

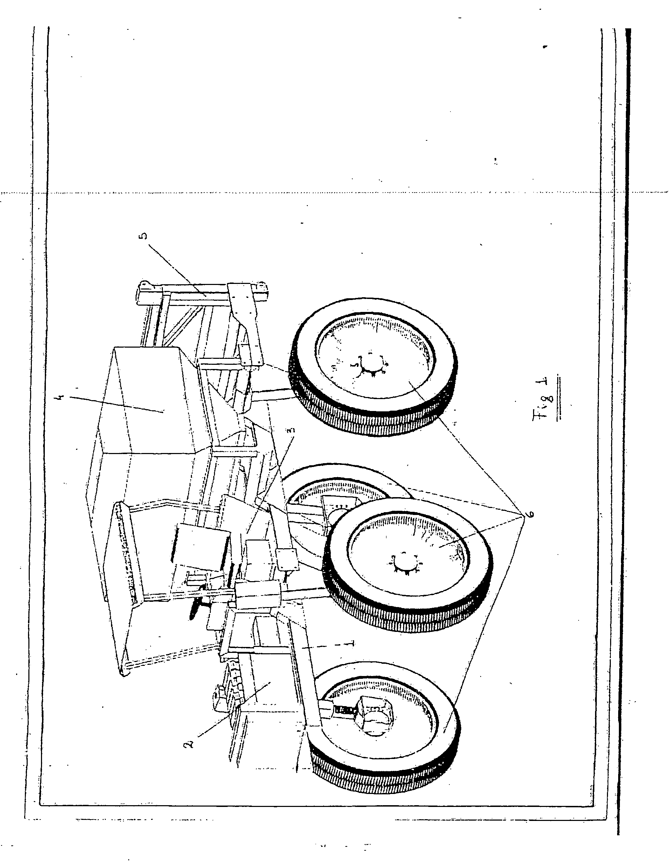

Figure 1 shows the high agricultural self-propelled machine with details of its elementary components, such as the frame (1), the power generation device (2), which consists of an internal combustion engine and hydraulic pumps, the interior (3) with its command posts, the hopper or deposit (4), the lifting mechanism (5) for bearing, dragging and lifting the relevant tools and the four wheels, which have a variable gauge, since the legs where they are attached are fixed to the frame by means of an adjustable displaceable system with a considerable diameter and the less width as possible.

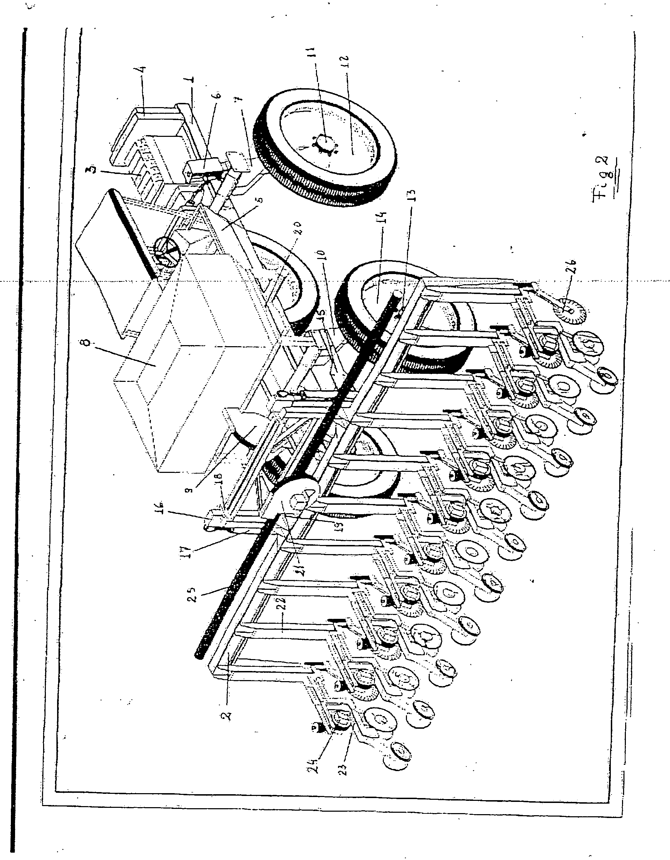

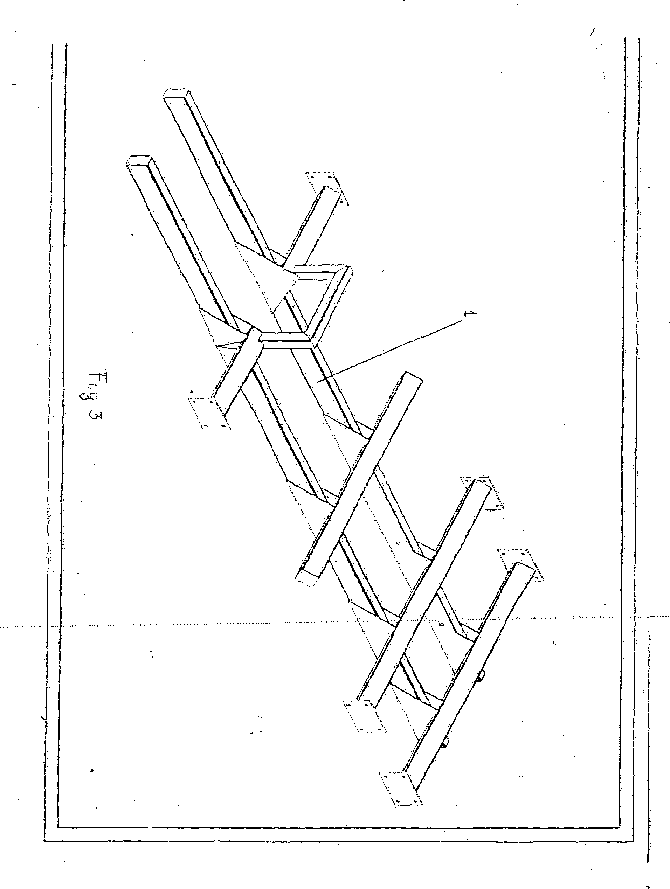

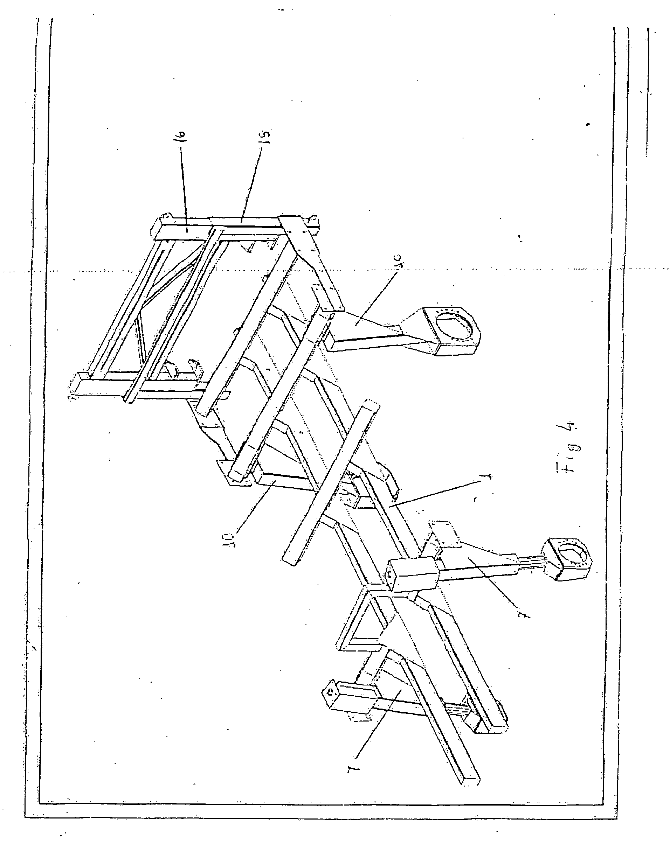

The novelty of this machine arises from the fact that its is self-propelled performs a great soil clearing with a minimum contact with the land, for which purpose it has the following configuration, as may be seen in figure 2: on the highly resistant frame (1) (complementary drawing in figure 3), there are four supporting legs, two rear (10) and two at the front (7), in the auxiliary complementary drawing in figure 4 there is the steering mechanism and the tiltable system (6) which absorbs deformations in the land, the legs and wheels (12 and 14), of a great diameter and minimum width, which are propelled by hydraulic engines (11 and 13). On this frame (1) lies the internal combustion engine (3) which is propelled with the hydrostatic pump of hydraulic transmission as well as the hydraulic pump for the requirements of the different labors. On the front of this engine are its cooling radiators and the hydraulic system's oil (4).

The assembled cab is shown in (5) for controlling and driving the machine, where the command post includes the seat, the wheel and the control for forward and backwards movements and the operation commands.

On the frame (1), behind the cab, there is the cradle for supporting the hopper (20). When the machine is used as a fertilizer sowing machine, the hopper of grains and solid fertilizers (8) is on the cradle (20), and the hopper may be divided in two for each product, or undivided for using only one product, and it has a good capacity, which provides a great autonomy.

The hopper has an air turbine (9) for the pneumatic transportation of grains and/or fertilizers from the container to the sowing devices, and, below, as a dosing system with hydraulic propelled finned tubes according to the machine's speed that may be regulated according to the dose to be applied.

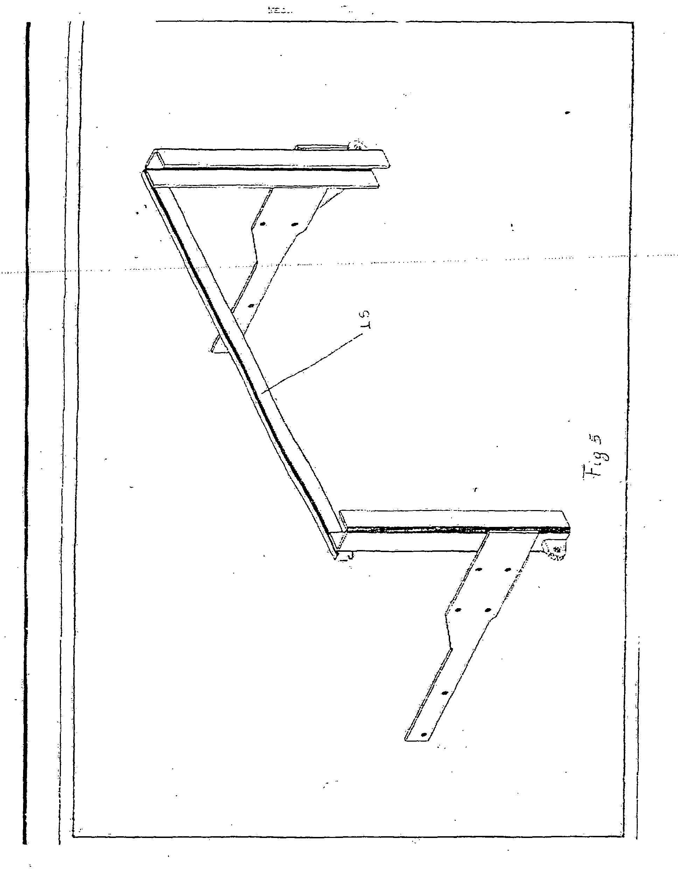

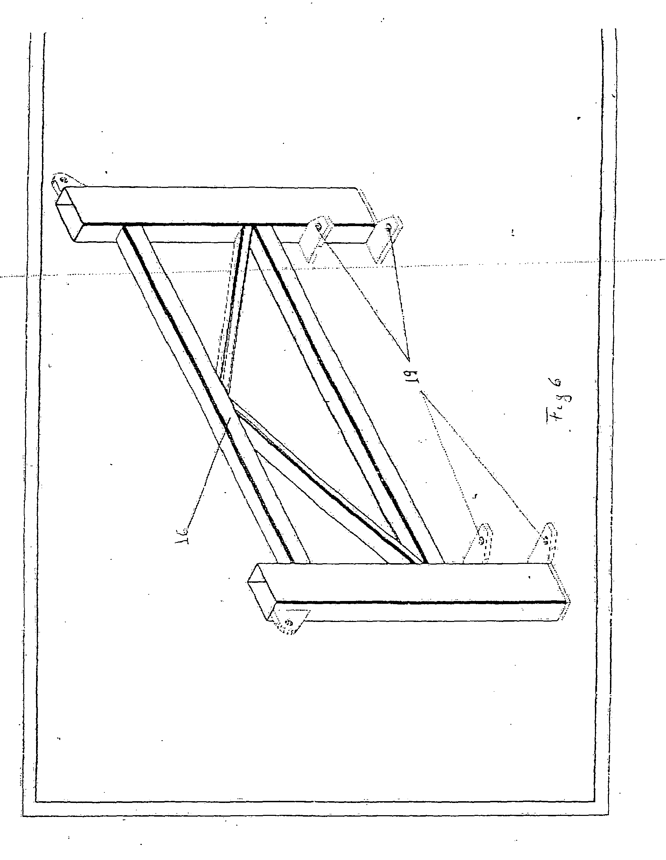

In the back part of the frame (1), there is the lifting holder (15) (complementary drawing in figure 5); and, inside, the lifting itself (16), (auxiliary complementary drawing in figure 6), propelled by the compensated hydraulic cylinders (17) on which the labor tools to be used are hanged and fixed with bolts (19). In the same example of the machine used as fertilizing sowing machine, on the lifting (16) the sowing machine is fixed. The sowing machine consists of a frame (2), a frame (27), with supporting hooks (18), on which lie and hangs the lifting system. It also the fixation bolts (19) its compact functioning.

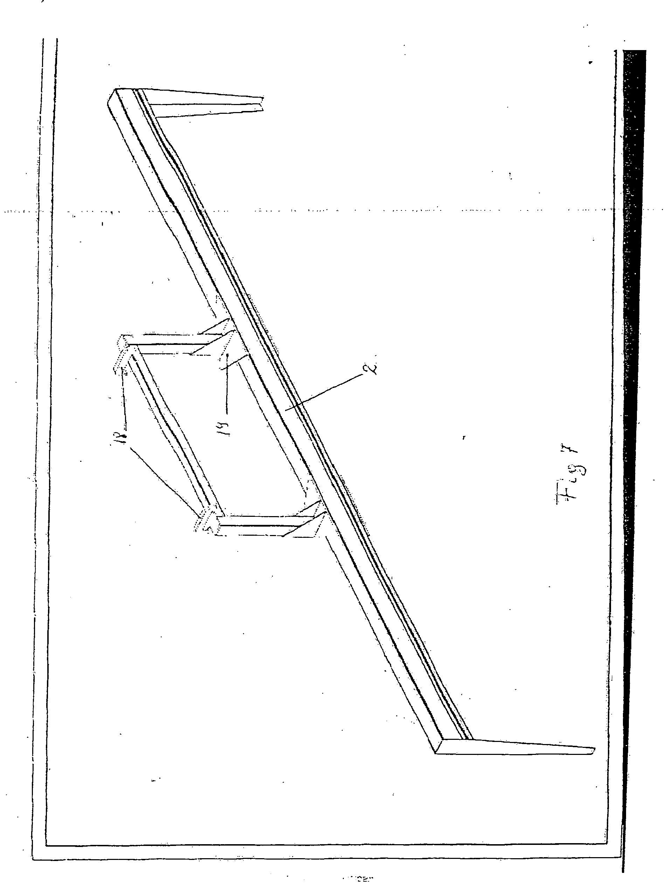

The sowing machine's frame is assembled with two separate beams (auxiliary complementary drawing fig. 7) which have a groove for passing only one bolt for fixing the supporting leg and the sowing bodies (22). In the inferior part the cutting blade (26) is fixed, and, by means of a deformable parallelogram, the sowing body (23), with its relevant sowing discs, the leveling wheel, the seeds cap and the wheels for covering or forming the furrows are fixed in their relevant positions and pressure.

The groove all along the frame permits to fit the leg supporting the sowing body in any position. Thus, sowing can be made at any distance between the lines. On the sowing bodies (23) are placed the sowing pneumatic dosage measurer, that, with the controlled hydraulic propelling centrifuge turbine (21) and the pneumatic distributor (25) complete the pneumatic sowing system.

In addition, the seed dosing can also be made either by means of mechanic dosing or directly from the hopper. The advantage of this self-propelled machine with a sowing and/or fertilizing device is that the sowing and/or fertilization elements may be easily disassembled, and, therefore, by assembling the fumigation and/or spraying elements, it may become a self-propelled fumigator and/or sprayer.

When the self-propelled machine is used as a fumigator, on the supporting cradle (20), the liquids deposit is placed, and, instead of the turbine (9) a fumigation pump is placed which is propelled by the same hydraulic command of the air turbine. On the lifting (16) the fumigation boom is hung and fixed. Its technical features are similar to those available in the market.

In case any other tool is fitted, if it has to use the lifting system, it may be either fitted in a similar was as described above for the sowing machine and fumigator, or by means of a bolt, as in any tractor available in the market.

The fact that the tools kit may be easily disassembled has the advantage of facilitating its transportation, since the kit may me transported in a trolley designed for this purpose, that may be carried by the machine and respect the width permitted by the traffic law.

Those materials, shapes, colors and dimensions, and, in general, all those aspects that do not alter or change the essence of this invention, are independent from the object of this patent.

Schematic simplified view of figure 2, with details of the following elements:
1. Tractor's frame.
2. Sowing machine's frame.
3. Diesel engine.
4. Radiators.
5. Cab.
6. Tiltable and steering system.
7. Front leg.
8. Hopper for solid grains and fertilizers.
9. Turbine for the pneumatic transportation of grains and fertilizers.
10. Rear leg.
11. Front hydraulic engine.
12. Front wheel.
13. Rear hydraulic engine.
14. Rear wheel.
15. Lifting holder.
16. Lifting.
17. Hydraulic cylinder that propels the lifting.
18. The sowing machine's frame holding hook.
19. Bolt for holding the sowing machine's trailer.
20. Turbine for the pneumatic dosing device.
21. Leg for holding the sowing trailer.
22. Sowing body.
23. Pneumatic grain dosing device.
24. Pneumatic distributor.
25. Blade for conventional or direct cuts.

After the above description of the nature and object of this patent, it is attested that the essential characteristics are shown in the next pages' claims:

## Claims

1. A multipurpose self-propelled agricultural machine of great soil clearing, **characterized in that** it has a structure that consists of a frame with four legs with motor wheels, propelled by an engine and command and transmission mechanisms, control cab, container and a mechanism for assembling and lifting labor tools.

2. A multipurpose self-propelled agricultural machine of great soil clearing, pursuant to claim 1, **characterized in that** the wheels holders may be adjusted to different gauge widths.

3. A multipurpose self-propelled agricultural machine of great soil clearing, pursuant to claim 1, **characterized in that** it has a hydrostatic transmission in two or four legs.

4. A multipurpose self-propelled agricultural machine of great soil clearing, pursuant to claim 1, **characterized in that** the directional wheels may be the front, the rear ones, or both.

5. A multipurpose self-propelled agricultural machine of great soil clearing, pursuant to claim 1, **characterized in that** its command, regulation and functioning and operations are performed in an electro-hydraulic way.

6. A multipurpose self-propelled agricultural machine of great soil clearing, pursuant to claim 1, **characterized in that** its command mechanism contains a pneumatic transportation of seeds and/or fertilizers as from the container to the sowing bodies.

7. A multipurpose self-propelled agricultural machine of great soil clearing pursuant as a whole and essentially to the description included in this descriptive memory represented in the attached figures for its better understanding.
